# EUROPEAN PATENT APPLICATION

(11) **EP 2 527 687 A2**
(43) Date of publication of application: **28.11.2012**
(21) Application number: 12168305.6
(22) Date of filing: 16.05.2012
(51) Int. Cl.: F16H 1/46

(54) **Planetary gear mechanism**

(30) Priority: 27.05.2011 JP 2011119463
(71) Applicant: Shinano Kenshi Co., Ltd., Ueda-shi, Nagano 386-0498 (JP)
(72) Inventor: Koike, Takaaki, Ueda-shi,, Nagano 386-0498 (JP)
(74) Representative: Dowling, Andrew

(57) **Abstract**

A planetary gear mechanism (A) includes: first and second sun gears (26, 36); a plurality of first planetary gears (35) meshing with the first sun gear (26); a plurality of second planetary gears (65) meshing with the second sun gear (36); a first ring gear (40) meshing with the plurality of first planetary gears; a second ring gear (80) meshing with the plurality of second planetary gears; a first carrier (30) to which the plurality of first planetary gears are rotatably coupled; a second carrier (60) to which the plurality of second planetary gears are rotatably coupled; a rotational shaft (38) rotating integrally with the first carrier and the second sun gear; and a bearing (50) held between the first and second ring gears, positioning the first and the second ring gears, and holding the rotational shaft for rotation.

## Description

### BACKGROUND

### (i) Technical Field

The present invention relates to a planetary gear mechanism.

### (ii) Related Art

There is a case where plural planetary gear mechanisms are coupled to each other in the axial direction. Plural planetary gear mechanisms are coupled to each other in the axial direction, thereby greatly changing a reduction ratio, as compared to a single planetary gear mechanism. Patent Document 1 discloses a technique relevant to such a planetary gear mechanism.

### [PRIOR ART DOCUMENT]

### [PATENT DOCUMENT]

[Patent Document 1] Japanese Patent Application Publication No. 2003-299310

### [SUMMARY OF THE INVENTION]

### [PROBLEMS TO BE SOLVED BY THE INVENTION]

In a case where plural planetary gear mechanisms are coupled to each other, in order to prevent a positional displacement of planetary gear mechanisms in the circumferential direction about the axis and in a direction perpendicular to the axis, it is conceivable that each planetary gear mechanism should be provided with a positioning portion.

The positioning portion having such a function may have a complicated shape. In a case where the planetary gear mechanism is small, it may be difficult to form such a positioning portion. Also, when the positioning portion has a complicated shape, the durability may deteriorate.

An object of the present invention is to provide a planetary gear mechanism suitable for downsizing.

### [MEANS FOR SOLVING THE PROBLEMS]

The above object is achieved by a planetary gear mechanism including: first and second sun gears; a plurality of first planetary gears meshing with the first sun gear; a plurality of second planetary gears meshing with the second sun gear; a first ring gear meshing with the plurality of first planetary gears; a second ring gear meshing with the plurality of second planetary gears; a first carrier to which the plurality of first planetary gears are rotatably coupled; a second carrier to which the plurality of second planetary gears are rotatably coupled; a rotational shaft rotating integrally with the first carrier and the second sun gear; and a bearing held between the first and second ring gears, positioning the first and the second ring gears, and holding the rotational shaft for rotation.

The bearing positions the first and second ring gears, thereby eliminating the necessity of providing a positioning portion having a complicated shape with each of the first and second ring gears. Such a planetary gear mechanism is suitable for downsizing.

### [EFFECTS OF THE INVENTION]

According to the present invention, it is possible to provide a planetary gear mechanism suitable for downsizing.

### [BRIEF DESCRIPTION OF THE DRAWINGS]

FIG. 1A is a perspective view of a planetary gear mechanism, and FIG. 1B is a front view of the planetary gear mechanism;
FIG. 2 is a sectional view taken along line A-A of FIG. 1B;
FIG. 3 is an exploded perspective view of ring gears and a bearing;
FIG. 4 is a cutout view of the ring gears and the bearing;
FIG. 5 is a sectional view of the ring gears;
FIG. 6 is a cutout view of the ring gears and the bearing assembled into each other; and
FIG. 7 is a sectional view of a planetary gear mechanism using a single ring gear.

### [MODES FOR CARRYING OUT THE INVENTION]

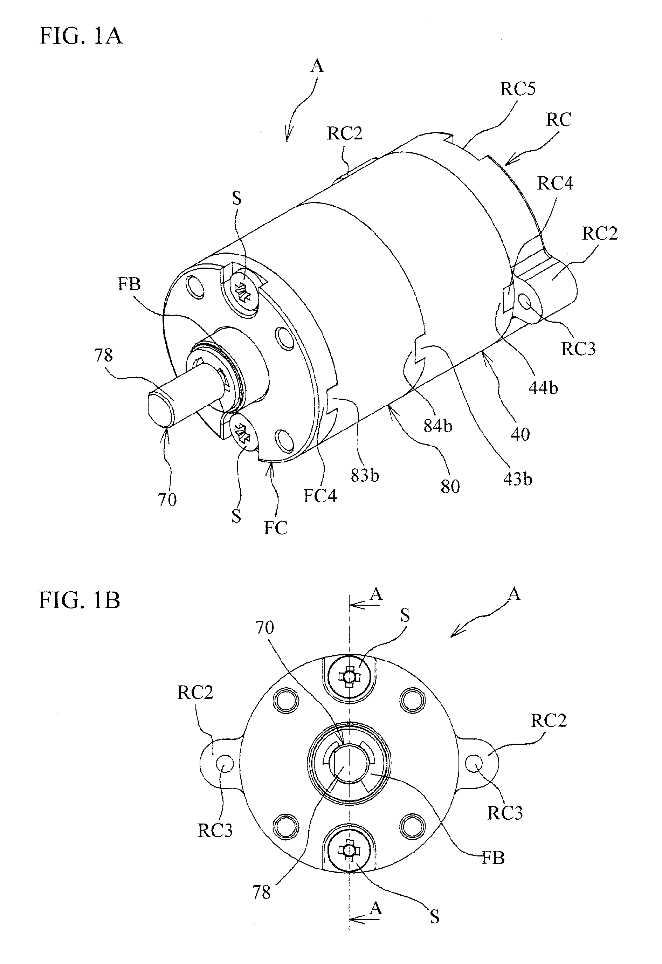

FIG. 1A is a perspective view of a planetary gear mechanism A, and FIG. 1B is a front view of the planetary gear mechanism A. As illustrated in FIG. 1A, the planetary gear mechanism A includes: ring gears 40 and 80 coupled to each other in the axial direction; a cover FC fixed to the front side of the ring gear 80; a cover RC fixed to the rear side of the ring gear 40; and an output shaft portion 78, protruding from the cover FC, of a carrier 70. The cover RC includes: projection portions RC2 protruding in the radial direction; holes RC3 respectively provided in the projection portions RC2 and respectively provided for screws fixing the cover RC to a motor or the like: a recess portion RC5 for positioning the cover RC with respect to the motor or the like. The ring gears 40 and 80 and the covers FC and RC are fixed by two screws S.

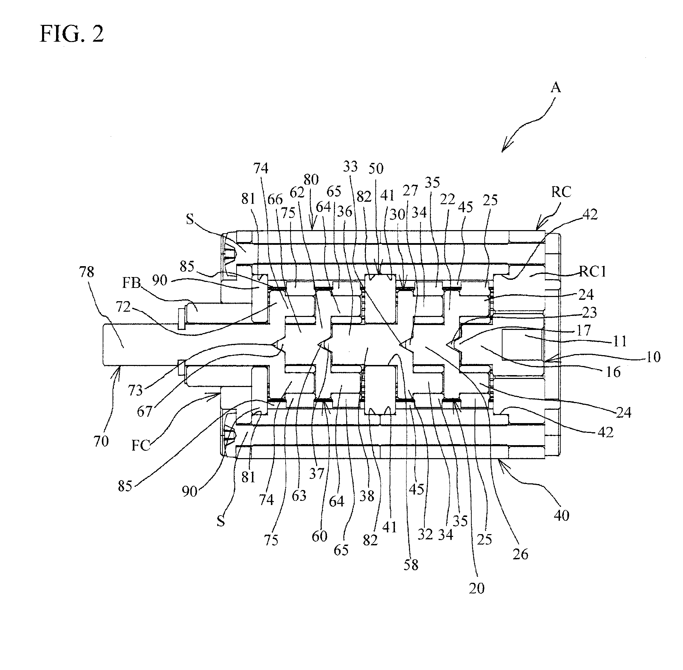

FIG. 2 is a sectional view taken along line A-A of FIG. 1B. The cover RC has a substantially disk shape and is provided with an opening at its center. A rotational member 10 is arranged and is exposed from the opening. A surrounding portion RC1 of the cover RC surrounds the rotational member 10. The rotational member 10 is formed at its rear end with a fitting hole into which an output shaft of the motor is fitted. The rotational member 10 is formed at its front end with a sun gear portion 16. A carrier 20 is arranged to face the rotational member 10. The carrier 20 includes: a disk portion 22 having a substantially disk shape; plural supporting spindle portions 24 protruding from the disk portion 22 toward the rear side; plural planetary gears 25 rotatably coupled to the plural supporting spindle portions 24, respectively; and a sun gear portion 26 provided at the front side of the disk portion 22. The plural planetary gears 25 mesh with the sun gear portion 16 of the rotational member 10.

The ring gear 40 is formed with an inner teeth portion 45 with which the plural planetary gears 25 also mesh. Since the sun gear portion 16 of the rotational member 10 also meshes with the plural planetary gears 25, the rotational member 10 rotates, so that the plural planetary gears 25 rotate and revolve in the ring gear 40. The plural planetary gears 25 revolve, so that the carrier 20 rotates.

Additionally, the sun gear portion 16 of the rotational member 10 is provided at its front side with a projection portion 17 protruding toward the carrier 20. The disk portion 22 of the carrier 20 is provided at its rear side with a recess portion 23 with which the projection portion 17 of the rotational member 10 engages. The projection portion 17 is formed at the center of the rotational member 10. The recess portion 23 is formed at the center of the carrier 20. The projection portion 17 and the recess portion 23 slide on each other. The engagement of the projection portion 17 with the recess portion 23 suppresses the positional displacement of the central axes of the rotational member 10 and the carrier 20.

A carrier 30 is arranged at the front side of the carrier 20. The carrier 30 includes: a disk portion 32 having a substantially disk shape; plural supporting spindle portions 34 protruding from the disk portion 32 toward the rear side; plural planetary gears 35 rotatably coupled to the plural supporting spindle portions 34, respectively; a rotational shaft portion 38 extending from the disk portion 32 toward the front side; and a sun gear portion 36 provided at the front side of the rotational shaft portion 38. The planetary gears 35 mesh with the sun gear portion 26 of the carrier 20 and an inner teeth portion 45 of the ring gear 40. The carrier 20 rotates, so that the planetary gears 35 rotate and revolve in the ring gear 40 and the rotational shaft portion 38 of the carrier 30 rotates. A bearing 50 is arranged between the ring gear 40 and ring gear 80. The bearing 50 is provided at its center with a hole 58. The rotational shaft portion 38 penetrates through the hole 58 of the bearing 50, and is rotatably held by the bearing 50. The sun gear portion 36 of the carrier 30 is located within the ring gear 80.

Additionally, the sun gear portion 26 of the carrier 20 is provided at its front side with a projection portion 27 protruding toward the carrier 30. The disk portion 32 of the carrier 30 is provided at its rear side with a recess portion 33 with which the projection portion 27 engages. The projection portion 27 and the recess portion 33 suppress the positional displacement of the center axes between the carriers 20 and 30.

The carrier 60 is arranged within the ring gear 80. The carrier 60 includes: a disk portion 62, spindle portions 64, planetary gears 65, and a sun gear portion 66. The shape of the carrier 60 is substantially the same as the shape of the carrier 20. The carrier 30 rotates, so that the planetary gears 65 rotate and revolve within the ring gear 80, and then the sun gear portion 66 of the carrier 60 rotates. Additionally, the sun gear portion 36 of the carrier 30 is provided at its front side with a projection portion 37 protruding toward the carrier 60. The disk portion 62 of the carrier 60 is provided at its rear side with a recess portion 63 with which the projection portion 37 engages.

The carrier 70 is arranged at the front side of the carrier 60. The carrier 70 includes: a disk portion 72, spindle portions 74, planetary gears 75, and the output shaft portion 78. The output shaft portion 78 penetrates through a hole formed in the cover FC, and extends toward the outside of the ring gear 80. Additionally, the cover FC is fixed with a bearing FB which holds the output shaft portion 78 for rotation. The carrier 60 rotates, so that the planetary gears 75 rotate and revolve, and then the output shaft portion 78 of the carrier 70 rotates. Additionally, the sun gear portion 66 of the carrier 60 is provided at its front side with a projection portion 67 protruding toward the carrier 70. The disk portion 72 of the carrier 70 is provided at its rear side with a recess portion 73 with which the projection portion 67 engages.

As described above, the rotational member 10 rotates, so that the output shaft portion 78 of the carrier 70 rotates at the reduced rotational speed. The planetary gear mechanism A is a planetary type of a planetary gear mechanism.

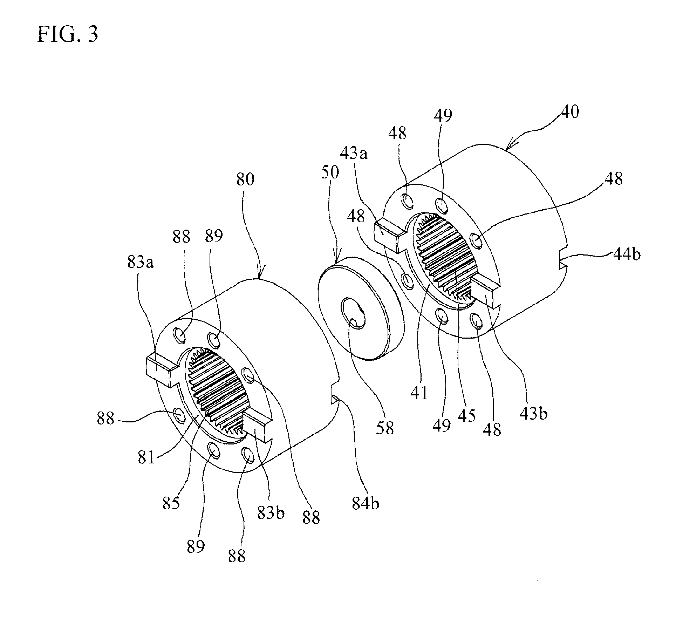

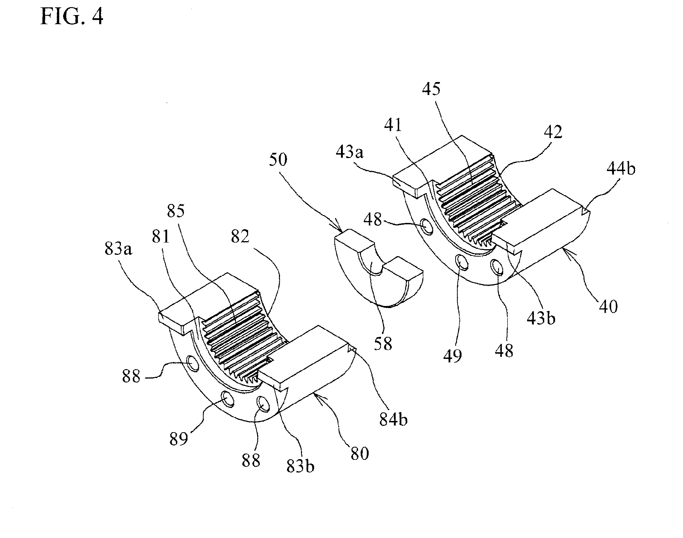

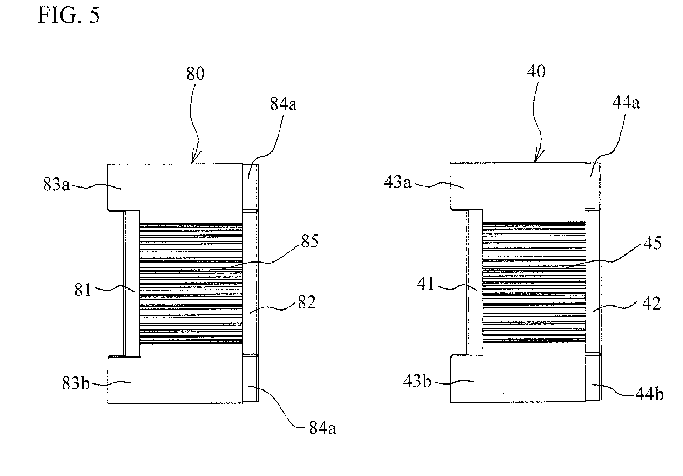

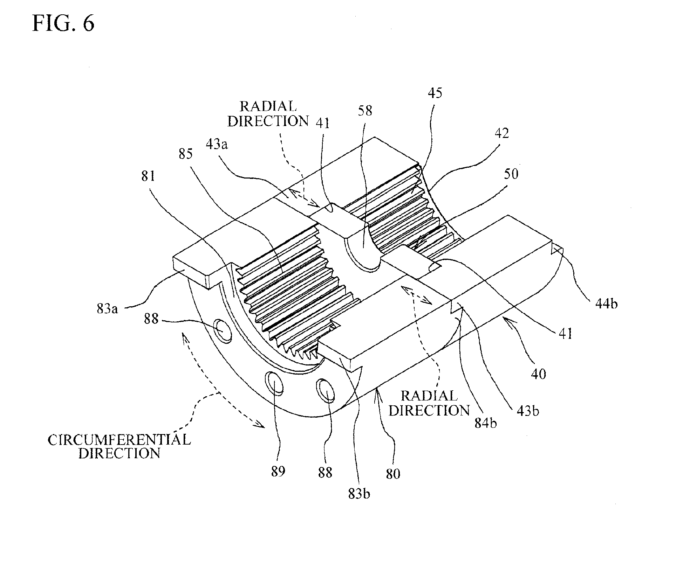

FIG. 3 is an exploded perspective view illustrating the ring gears 40 and 80, and the bearing 50. The ring gears 40 and 80 have the same shape, size, and material. FIG. 4 is a cutout view of the ring gears 40 and 80 and the bearing 50. FIG. 5 is a sectional view of the ring gears 40 and 80. FIG. 6 is a cutout view of the ring gears 40 and 80 and the bearing 50 assembled into one another.

As illustrated in FIGs. 3 to 5, the ring gear 40 is provided at its front side with engaging portions 43a and 43b. The ring gear 40 is provided at its rear side with engaging portions 44a and 44b. The engaging portions 43a and 43b each have a projection shape protruding from the front side of the ring gear 40. The engaging portions 44a and 44b each have a recess shape on a surface of the rear side of the ring gear 40. The engaging portions 43a and 43b are provided to sandwich the central axis of the ring gear 40 therebetween. Likewise, the engaging portions 44a and 44b are provided to sandwich the central axis of the ring gear 40. The ring gear 40 is provided with plural holes 48 and 49 in the circumstantial direction. The hole 48 is a screw hole into which a screw S is capable of fitting. The hole 49 is a screw hole into which a screw, not illustrated, is capable of fitting, and the screw is provided for connecting the planetary gear mechanism to a device.

Likewise, engaging portions 83a and 83b are provided at the front side of the ring gear 80, and engaging portions 84a and 84b are provided at the rear end of the ring gear 80. The engaging portions 43a, 43b, 44a, 44b, 83a, 83b, 84a, and 84b suppress the relatively positional displacement of the ring gears 40 and 80.

As illustrated in FIG. 6, the engaging portions 43a and 43b of the ring gear 40 engage with the engaging portions 83a and 83b of the ring gear 80 respectively. Herein, the engaging portions 43a and 43b protrude in the axial direction, and extend in the direction perpendicular to the axis of the ring gear 40, that is, in the radial direction. Likewise, the engaging portions 83a and 83b are depressed in the axial direction, and extend in the radial direction.
The respective engagement of the engaging portions 43a and 43b with the engaging portions 84a and 84b suppresses the positional displacement of the ring gears 40 and 80 in the circumferential direction about the central axis.

The inner teeth portion 45 of the ring gear 40 is provided at its front side with a fitting portion 41 and is provided at its rear side with a fitting portion 42. The fitting portions 41 and 42 are provided at the inside of the ring gear 40, and each have a round surface not provided with a tooth. The diameters of the fitting portions 41 and 42 are the same. Each diameter of the fitting portions 41 and 42 is greater than a pitch circle diameter of the inner teeth portion 45, but is not limited to this. Likewise, the inner teeth portion 85 of the ring gear 80 is provided at its front side with a fitting portion 81. The inner teeth portion 85 of the ring gear 80 is provided at its rear side with a fitting portion 82. The diameters of the fitting portions 41, 42, 81, and 82 are the same.

As illustrated in FIG. 6, the bearing 50 is arranged between the ring gears 40 and 80. Specifically, the bearing 50 fits into the fitting portion 41 of the ring gear 40 and the fitting portion 82 of the ring gear 80. Thus, the surfaces of the fitting portions 41 and 82 abut with an outer surface the bearing 50. This suppresses the positional displacement of the ring gear 40 with respect to the bearing 50 in the radial direction perpendicular to the axis. This also suppresses the positional displacement of the ring gear 80 with respect to the bearing 50 in the radial direction perpendicular to the axis. Thus, the bearing 50 positions the ring gears 40 and 80 in the radial direction. Additionally, the bearing 50 may or may not be pressure-fitted into the fitting portion 41 of the ring gear 40 or the fitting portion 82 of the ring gear 80.

As described above, the engaging portions 43a, 43b, 84a, and 84b function to position the ring gears 40 and 80 in the circumferential direction. The bearing 50 functions to position the ring gears 40 and 80 in the radial direction.

Herein, it is assumed that the engaging portions 43a, 43b, 84a, and 84b each have such a shape as to position the ring gears 40 and 80 in the radial direction, in addition, and in the circumferential direction. If such a function is given to the engaging portion 43a or the like, its shape is complicated.
The complication of the shape of the engaging portion 43a or the like might lead the forming to be difficult or might lead the durability of the engaging portion 43a to deteriorate. In particular, in a case where the ring gears 40 and 80 each have small size, the engaging portion 43a or the like also has a small and complicated shape. Thus, the durability might deteriorate. In a case where the durability of the engaging portion 43a or the like deteriorates, the engaging portion 43a might be damaged during the assembling of the planetary gear mechanism A. For example, when the ring gears 40 and 80 are dropped during the assembling or when the ring gears 40 and 80 are applied with any external force before being fixed by screws, the engaging portion 43a might be damaged.

In the planetary gear mechanism A according to the present embodiment, the engaging portions 43a and 43b each have a simple projection shape. The engaging portions 84a and 84b of the ring gear 80 each have a simple recess shape. This improves the durability of the engaging portion 43a or the like to prevent the damage. Thus, even in a case where the engaging portion 43a or the like is small, the durability of the engaging portion 43a or the like can be secured. Therefore, the planetary gear mechanism A is suitable for downsizing. However, such a simple shape of the engaging portion 43a or the like cannot suppress the positional displacement of the ring gears 40 and 80 in the direction perpendicular to the axis. Specifically, although the engaging portion 43a or the like extends in a single direction perpendicular to the axis, the ring gears 40 and 80 can be relatively displaced in such a single direction. In accordance with the embodiment, the fitting portion 41 of the ring gear 40 and the fitting portion 82 of the ring gear 80 are positioned by the bearing 50 as a common member. The bearing 50 has a round shape as illustrated in FIG. 3. Therefore, the bearing 50 fits into the fitting portion 41 of the ring gear 40 and the fitting portion 82 of the ring gear 80, thereby suppressing the positional displacement of the ring gears 40 and 80 in the radial direction.

As mentioned above, the relatively positional displacement of the ring gears 40 and 80 are restricted by the bearing 50, in addition, and the engaging portions 43a and 43b and the engaging portions 84a and 84b of the ring gear 80. Thus, even when the external force is applied to the ring gears 40 and 80, the force concentrates only on the engaging portions 43a, 43b, 84a, and 84b. This prevents the engaging portions 43a, 43b, 84a, and 84b from being damaged. Thus, even if the engaging portion 43a or the like is small, the external force is prevented from concentrating on the engaging portion 43a or the like. Accordingly, the planetary gear mechanism A is suitable for downsizing.

As mentioned above, the hole 58 is opened at the center of the bearing 50, the rotational shaft portion 38 of the carrier 30 penetrates pivotally in the hole 58. For this reason, the bearing 50 controls the position gap of the rotational shaft portion 38 of the carrier 30.

Additionally, as illustrated in FIG. 2, the ring gear 80 is provided at its front side with the fitting portion 81 into which a member 90, having a disk shape, fits. The member 90 is provided with a hole through which the output shaft portion 78 penetrates. The ring gear 40 is provided at its rear side with the fitting portion 42 into which the cover RC fits. Further, as illustrated in FIG. 1, the ring gear 40 is provided at its rear side with the engaging portions 44a and 44b with which engaging portions RC4 protruding to the front side and provided in the cover RC engage respectively. Also, as illustrated in FIG. 1, the ring gear 80 is provided at its front side with the engaging portions 83a and 83b with which engaging portions FC4, each having a recess shape and provided in the cover FC, engage respectively.

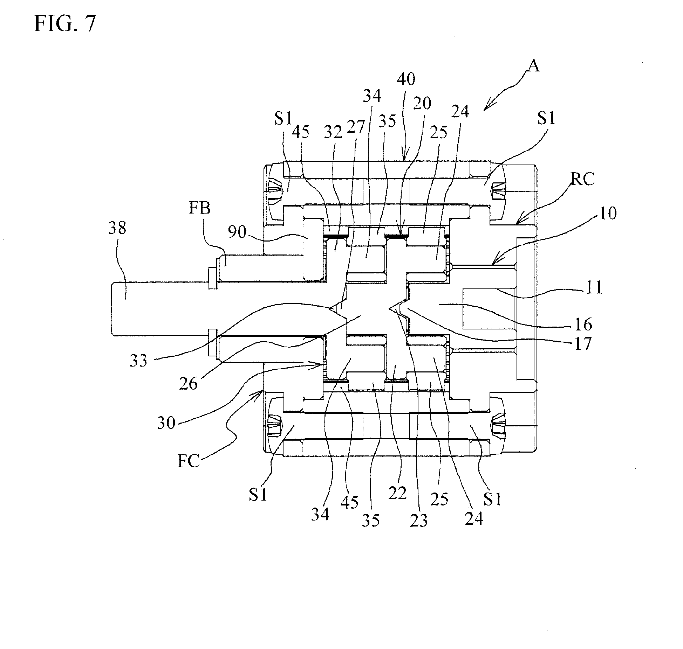

FIG. 7 is a sectional view of the planetary gear mechanism A1 using the single ring gear 40. The rear side of the ring gear 40 is fixed with the cover RC by screws S1. The front side of the ring gear 40 is fixed with the cover FC by the screws S1. In such a way, the planetary gear mechanism A1 having a short length in the axial direction can be assembled by use of the most of parts of the planetary gear mechanism A. Therefore, the most of parts are commonly used between the plural planetary gear mechanisms which have different size in the axial direction. This reduces the manufacturing cost.

While the exemplary embodiments of the present invention have been illustrated in detail, the present invention is not limited to the above-mentioned embodiments, and other embodiments, variations and modifications may be made without departing from the scope of the present invention.

The planetary type of the planetary gear mechanism has been described as an example in the above embodiment. However, the present invention may be applied to a solar type of the planetary gear mechanism where the sun gear is fixed, the ring gear rotates, and the carrier is driven. The present invention may be applied to a star type of the planetary gear mechanism where the carrier is fixed, the sun gear rotates, and the ring gear is driven.

In the above embodiment, the carriers 20 and 30 are arranged within the ring gear 40. However, a single carrier or more than two carriers may be arranged. Likewise, a single carrier or more than two carriers may be arranged within the ring gear 80.

More than two ring gears may be connected together, and a bearing may be arranged between adjacent ring gears to position the ring gears.

In the planetary gear mechanisms A and A1, the carrier 20 is integrally formed with the sun gear portion 26. However, the present invention is not limited to this configuration. A carrier and a sun gear may be individually formed, and may be connected to each other to rotate integrally therewith. This is applicable to the other carriers 30, 60, and 70. For example, in the carrier 30, the rotational shaft portion 38 and the sun gear portion 36 are individually formed. The carrier 70 may be separated from the output shaft portion 78.

## Claims

1. A planetary gear mechanism (A) comprising:
first and second sun gears (26, 36);
a plurality of first planetary gears (35) meshing with the first sun gear (26);
a plurality of second planetary gears (65) meshing with the second sun gear (36);
a first ring gear (40) meshing with the plurality of first planetary gears;
a second ring gear (80) meshing with the plurality of second planetary gears;
a first carrier (30) to which the plurality of first planetary gears are rotatably coupled;
a second carrier (60) to which the plurality of second planetary gears are rotatably coupled;
a rotational shaft (38) rotating integrally with the first carrier and the second sun gear; and
a bearing (50) held between the first and second ring gears, positioning the first and the second ring gears, and holding the rotational shaft for rotation.

2. The planetary gear mechanism of claim 1, wherein
the first ring gear (40) comprises a first fitting portion (41) into which the bearing (50) is fitted,
the second ring gear (80) comprises a second fitting portion (82) into which the bearing is fitted, and
the bearing (50) is fitted into the first and second fitting portions to restrict positional displacement of the first and second ring gears in a radial direction.

3. The planetary gear mechanism of claim 1 or 2,
wherein
the first ring gear (40) comprises a first engaging portion (43a, 43b) engaging with the second ring gear (80),
the second ring gear comprises a second engaging portion (83a, 83b) engaging with the first engaging portion, and
the first and second engaging portions engage with each other to restrict positional displacement of the first and second ring gears in a circumferential direction.

4. The planetary gear mechanism of any of claims 1 to 3, wherein shapes of the first and second ring gears (40, 80) are the same.
